# EUROPÄISCHE PATENTANMELDUNG

(11) **EP 0 995 856 A1**
(43) Veröffentlichungstag der Anmeldung: **26.04.2000**
(21) Anmeldenummer: 99105874.4
(22) Anmeldetag: 23.03.1999
(51) Int. Cl.: E04D 13/08, B01D 35/02

(54) **Zisternenfilter**

(30) Priorität: 15.10.1998 DE 19847655
(71) Anmelder: GEP Umwelttechnik GmbH, 53783 Eitorf (DE)
(72) Erfinder: Ehlert, Ulrich, 53783 Eitorf (DE)
(74) Vertreter: Lenzing, Andreas, Dr.

(57) **Zusammenfassung**

Die Erfindung betrifft eine Vorrichtung zum Filtern von Flüssigkeit mit einem Gehäuse (1), welches einen Zulauf (1a) für die ungefilterte, einen Ablauf (1b) für die gefilterte und einen Ablauf (1c) für die ungefilterte Flüssigkeit aufweist, und mit einem im Gehäuse (1) angeordneten herausnehmbaren Einsatz (2), welcher ein Sieb (3) aufweist, wobei der Einsatz (2) dem Gehäuse (1) zugewandte, mit dem Zulauf (1a) bzw. den Abläufen (1b,1c) kommunizierende Öffnungen (2a,2b,2c) aufweist, wobei das Gehäuse (1) eine obere und eine untere Öffnung (1h,1i) zum Durchgreifen oder Durchgang bei herausgenommenem Einsatz (2) hat, und der Einsatz (2) durch die obere Öffnung (1h) in das Gehäuse (1) einsetzbar ist und die aus dem Ablauf (1c) für gefilterte Flüssigkeit fließende Flüssigkeit über eine Zuleitung (7) in einen unterhalb der Vorrichtung angeordneten Flüssigkeitsspeicher gelangt, wobei der Ablauf (1c) für die gefilterte Flüssigkeit seitlich neben der unteren Öffnung (1h) des Gehäuses (1) angeordnet ist.

## Beschreibung

Die vorliegende Erfindung betrifft einen Filter für strömendes, Feststoffe mitführendes Wasser, insbesondere einen Regenwasserfilter.

Im Stand der Technik sind zahlreiche Regenwasserfilter zum Einbau in die Fallrohre von Dachrinnen bekannt, so beispielsweise aus der US-PS 1,230,024, aus der DE 2908620 A1, aus der DE 3518302 A1 sowie aus dem Gebrauchsmuster G7635684 U1. Bei diesen Regenwasserfiltern tritt das Schmutzwasser von oben mit großer Geschwindigkeit in den Filter ein und wird dort im wesentlichen geradeaus in Fallrichtung nach unten weitergeleitet. In einem Randbereich der bekannten Regenwasserfilter wird ein Teilstrom, der von Laub und dergleichen befreit ist, radial nach außen zu einer Zisterne oder einem Sammelbehälter geleitet.

Derartige Filter sind aus dem Stand der Technik bekannt, beispielsweise als Fallrohrfilter zur Einbringung in Fallrohre von Dachrinnenanlagen oder als Erdfilter, bei denen der Regenwasserstrom in einen Filterwasserstrom und einen Schmutzwasserstrom aufgetrennt wird. Die beiden ausgehenden Wasserströme werden außerhalb des Filters separat in Rohrleitungen weitergeleitet. Der Filterwasserstrom gelangt üblicherweise in einen Vorratstank oder eine Zisterne, wo er zur weiteren Verwendung bevorratet wird. Es gibt auch Ansätze, die Regenwasserfilter unmittelbar in Zisternen einzubauen. Hierzu sind Filter bekannt, die im Dombereich einer Zisterne seitlich angebracht werden, so daß im Dom ein ausreichend großer freier Querschnitt als Mannloch verbleibt. Diese Filter sind hinsichtlich der Wasserführung, der Wartung und der Filterleistung unbefriedigend.

Es ist daher Aufgabe der vorliegenden Erfindung, eine Vorrichtung zum Filtern von verschmutzten Flüssigkeiten zu schaffen, die im Dombereich einer Zisterne angeordnet werden kann und die bei einer großen möglichen Siebfläche und einfach zu gestaltender Wasserführung leicht gewartet werden kann und einen großen Einstiegsbereich in die Zisterne bei herausgenommenem Einsatz gewährleistet.

Diese Aufgabe wird von einer Vorrichtung mit den Merkmalen des Anspruchs 1 gelöst. Weitere vorteilhafte Ausgestaltungen der Vorrichtung ergeben sich durch die Merkmale der Unteransprüche.

Die erfindungsgemäße Vorrichtung zeichnet sich dadurch aus, daß bei Herausnahme des Einsatzes, in dem das Sieb zur Filterung der zur reinigenden Flüssigkeit angeordnet ist, durch das Gehäuse der Vorrichtung der Einstieg in den Unterhalb der Vorrichtung angeordneten Flüssigkeitsspeicher bzw. die Zisterne problemlos möglich ist. Dies wird erfinderisch dadurch erreicht, daß die Zuleitung, durch die die gefilterte Flüssigkeit in den Flüssigkeitsspeicher gelangt, seitlich neben der Durchstiegsöffnung des Gehäuses der Vorrichtung angeordnet ist. Durch ihre Konstruktion kann die erfindungsgemäße Vorrichtung vorteilhaft innerhalb einer Betonzisterne oder aber auch auf einem Kunststofftank angeordnet werden. In beiden Fällen kann dieselbe Vorrichtung verwendet werden, wobei beim Einsatz der Vorrichtung in einer Betonzisterne diese direkt oder über einen Adapterring in den konischen Bereich der Betonzisterne befestigtbar ist.

Für den Einsatz auf einem Kunststofftank wird die Vorrichtung lediglich in eine Öffnung im oberen Bereich des Kunststofftanks eingesetzt, wobei eine am Gehäuse befindliche vollständig oder teilweise umlaufende Ringschulter vorgesehen ist, die ein Durchfallen durch die Öffnung des Kunststofftanks verhindert. Vorteilhaft kann das Gehäuse der Vorrichtung mittels einer Schweiß- oder Schraubverbindung mit dem Kunststofftank derart verbunden werden, daß keine Flüssigkeiten oder Gase zwischen der Vorrichtung und der Wandung des Kunststofftanks entweichen kann.

In einer weiteren vorteilhaften Ausführungsform ist das Gehäuse der Filtervorrichtung Bestandteil des Kunststoffbehälters.

Damit die Durchstiegsöffnung durch das Gehäuse bei herausgenommenen Einsatz möglichst groß ist, erfolgt der Zu- und Ablauf der Flüssigkeit vom Gehäuse zum Einsatz und aus dem Einsatz heraus zum Gehäuse über die Seitenwände des insbesondere zylinderförmigen Einsatzes.

Damit der Einsatz nicht durch die Durchgangsöffnung nach unten in oder auf den Flüssigkeitsspeicher fällt, sind Haltevorrichtungen am Gehäuse der Vorrichtung vorgesehen, auf denen der Einsatz zu liegen kommt. Diese Haltevorrichtungen sind insbesondere freistehende Stützflächen, in die aus dem Einsatz herausragende Auslaßstutzen beim Einsetzen des Einsatzes in das Gehäuse zur Einlage gelangen. Die Stützflächen des Gehäuses sind vorteilhaft im Querschnitt halbkreisförmig und nach oben geöffnet. Die Auslaßstutzen können ebenfalls im Querschnitt halbkreisförmig sein, wobei deren Außendurchmesser geringfügig kleiner ist als der Innendurchmesser der Stützflächen des Gehäuses. Damit keine Flüssigkeit zwischen der jeweiligen Stützfläche und dem Auslaßstutzen hindurch seitlich zwischen dem Gehäuse und dem Einsatz nach unten zum Flüssigkeitsspeicher gelangen kann, befinden sich zwischen den Stützflächen und den Auslaßstutzen Dichtelemente.

Damit die Flüssigkeit vom Zulauf hin zu den Abläufen gelangen kann, ist ein Gefälle notwendig. Aus diesem Grunde muß der Zulauf oberhalb der Abläufe angeordnet sein. Dies bedingt, daß die Zu- und Abläufe derart an das Gehäuse angrenzen müssen, daß sich in Einsetzrichtung des Einsatzes in das Gehäuse die Auslaßstutzen nicht überdecken.

Sofern der Zulauf und ein Ablauf übereinander angeordnet werden müssen, ist es notwendig die Stützflächen und Auslaßstutzen derart anzuordnen, daß der untere Auslaßstutzen versetzt nach innen angeordnet ist, so daß er an der Stützfläche für den oberhalb gelegenen Auslaßstutzen vorbei, hin zu seiner korrespondierenden Stützfläche des Gehäuses gelangen kann.

Das Gehäuse ist vorteilhaft doppelwandig ausgebildet, wobei insbesondere die gefilterte Flüssigkeit durch einen durch die Doppelwand und diese miteinander verbindende Zwischentrennwände gebildeten Raum hin zur Zuleitung fließt. Vorteilhaft kann zwischen der Außen- und der Innenwand des Gehäuses ein Siphon zur Vermeidung von Geruchsbildung angeordnet sein.

Die Außen- und Innenwandung des Gehäuses welches vorteilhaft aus Kunststoff besteht, kann entweder miteinander verrastet oder verschweißt sein. Die Verschweißung erfolgt durch eine Schweißnaht, die zwischen der Außenwand und der Innenwand angeordnet ist. Das Gehäuse kann auch vorteilhaft in einem Fertigungsschritt mittels des Roationssinterverfahrens hergestellt werden.

Das Sieb des Einsatzes ist vorteilhaft herausnehmbar, so daß es problemlos gereinigt oder ersetzt werden kann.

Weil ein Anschluß für ein Leerrohr vorgesehen ist, wobei der Anschluß derart angeordnet ist, daß das Leerrohr mit dem Flüssigkeitsspeicher kommuniziert und insbesondere die gespeicherte Flüssigkeit von dem Leerrohr aus erreichbar ist, kann eine Saugleitung und gegebenenfalls eine Sensorleitung für den Wasserstand ohne weitere Einbauten und im Falle einer Kunststoffzisterne auch ohne Durchbrüche an dem Filtergehäuse oder der Zisterne angebracht werden.

Damit die gesamte zu filternde Flüssigkeit am Sieb entlang strömt, ist der Siebbereich mit dem Zulauf mittels eines Kanals, insbesondere einer nach oben offenen Rinne, verbunden. Es ist auch vorstellbar den Kanal mittels einer rohrförmigen Leitung zu bilden. Das Sieb selbst kann eine Rinne bilden, wobei die nicht zu reinigende Flüssigkeit durch die vom Sieb gebildete Rinne hin zum Ablauf für die ungefilterte Flüssigkeit gelangen kann. Der Kanal vom Zulauf hin zum Ablauf für die ungefilterte Flüssigkeit wird vorteilhaft durch eine schräge Innenwand, welche den Abfluß für die gefilterte Flüssigkeit von dem Ablauf für die ungefilterte Flüssigkeit und dem Zulauf trennt, gebildet, wobei vorteilhaft die nach oben offene Rinne in diese Trennwand eingeformt ist, wobei in der Rinne selbst eine Öffnung vorgesehen ist, welche von dem Sieb überdeckt wird.

Für den Einsatz zur Filterung von insbesondere Regenwasser, hat es sich als vorteilhaft herausgestellt, daß das Sieb ein Spaltsieb ist, dessen Spalte eine Breite von 150 - 500 µm, vorzugsweise 250 - 400 µm aufweisen.

Im folgenden werden mögliche Ausführungsformen der vorliegenden Erfindung anhand von Zeichnungen näher erläutert.

Es zeigen:
- Figur 1:: eine Querschnittsdarstellung durch eine in einer Betonzisterne befestigte erfindungsgemäße Vorrichtung;
- Figur 2:: eine Draufsicht auf das Gehäuse;
- Figur 3:: eine Draufsicht auf den Einsatz;
- Figur 4:: eine Draufsicht auf das Gehäuse mit eingesetztem Einsatz;
- Figur 5a und Figur 5b:: Ausschnittvergrößerung des Übergangsbereichs zwischen dem Einsatz und dem Gehäuse;
- Figur 6:: Eine Draufsichts- und Querschnittsdarstellung durch die erfindungsgemäße Vorrichtung mit montierten Zuläufen und Abläufen;
- Figur 7:: Seitenansicht und Querschnittsdarstellung durch die Vorrichtung mit integrierten Siphon in der Doppelwand des Gehäuses;
- Figur 8:: Funktionsweise des Siphons;
- Figur 9:: Erfindungsgemäße Vorrichtung auf Kunststofftank montiert; sowie
- Figur 10:: eine weitere Ausführungsform der erfindungsgemäßen Vorrichtung in einer Darstellung entsprechend Figur 6.

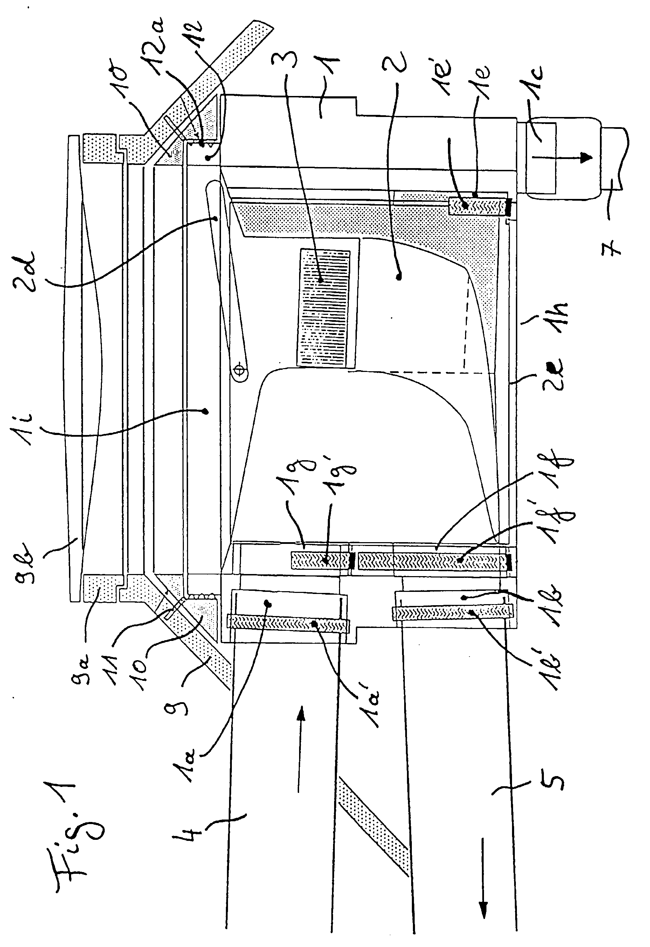

Die Figur 1 zeigt eine Querschnittsdarstellung durch den oberen Bereich einer Betonzisterne 9, welche mittels eines Aufsatzes 9a und eines Deckels 9b verschlossen ist. In dem konischen Bereich der Betonzisterne ist mittels Verankerungen 11 ein Adapterring 10 befestigt, in den mittels eines Gewindes 12a das Gehäuse 1 der Vorrichtung zum Filtern von Flüssigkeiten eingeschraubt ist. Das Gehäuse 1 weist einen Verbindungsstutzen 12 auf, der ein mit dem Gewinde des Adapterrings 10 korrespondierendes Außengewinde 12a hat. Es sind jedoch auch andere Verbindungsmöglichkeiten zwischen dem Adapterring und dem Gehäuse, sowie zwischen der Betonzisterne und dem Gehäuse direkt, d.h. unter Wegfall des Adaperrings, denkbar. Das Gehäuse 1 ist rohrförmig und hat eine obere Öffnung 1i und eine untere Öffnung 1h. Durch die obere Öffnung 1i kann in das Gehäuse 1 ein Einsatz 2 eingesetzt werden. Der Einsatz 2 verfügt über einen Henkel 2d zur leichteren Herausnahme des Einsatzes 2 aus dem Gehäuse 1. Das Gehäuse 1 hat eine Zulauföffnung 1a, in die mittels einer Dichtung 1a' das Zulaufrohr einschiebbar ist. Es ist darauf zu achten, daß das Zulaufrohr 4 ein genügendes Gefälle aufweist. Der Zulauf 1a ist eine fensterartige Öffnung, an die der U-förmige Stutzen 1g zur Einlage des Auslaßstutzens 2a' des Einsatzes 1 angrenzt insbesondere angeformt ist. Ebenso weist das Gehäuse 1 ein Ablauf 1b für die ungefilterte Flüssigkeit sowie einen Ablauf 1c für die gefilterte Flüssigkeit auf, wobei jeweils ein Ablaufrohr 5 bzw. ein Zuleitungsrohr 7 mit den Abläufen 1b und 1c verbunden ist. Im Bereich der Abläufe 1b und 1c sind ebenfalls U-förmige Stutzen 1e und 1f zur Einlage des jeweils korrespondierenden Auslaßstutzens bzw. Kanals 2b' und 2c' vorgesehen. Dichtungselemente 1e', 1f' und 1g' liegen zwischen den U-förmigen Stutzen zur Einlage bzw. den Stützelementen 1e, 1f und 1g sowie den jeweils in ihnen zur Einlage gebrachten Auslaßstutzen 2a', 2b' und 2c' ein, damit die vom Zulauf 1a in den Einsatz hineinfließende Flüssigkeit bzw. vom Einsatz in die Abläufe fließende Flüssigkeit nicht in den Bereich zwischen der Außenwand des Einsatzes und der Innenwand des Gehäuses 1 gelangen kann. Im Einsatz 2 ist das Sieb 3 angeordnet, durch das die vom Zulauf 1a kommende Flüssigkeit zum Ablauf 1c gelangt. Die ungefilterte Flüssigkeit gelangt über das Sieb 3 hin zum Ablauf 1b.

Wie aus Figur 2 ersichtlich, ist das Gehäuse 1 ein im wesentliche zylinderförmiges Teil, welches über den Zylindermantel verteilte fensterartige Öffnung 1a, 1b und 1c hat, welche den Zulauf und die Abläufe bilden. Der Außendurchmesser D1 beträgt in einer vorteilhaften Ausführungsform 800 mm der Innendurchmesser D2 600 mm. Die U-förmigen Stutzen 1e, 1f, 1g stehen über die zylindrische Innenwand des Gehäuses 1 vor, so daß die Auslaßstutzen 2a', 2b' und 2c' zur Einlage in diese gelangen können. Der Einstiegsbereich 1k wird durch die U-förmigen Stutzen nur geringfügig gegenüber der oberen Öffnung 1i des Gehäuses 1 verkleinert. Der Ablauf 1c ist unterhalb des U-förmigen Stutzens 1e und der Gehäusewandung des Gehäuses 1 angeordnet und ragt nicht in den Einstiegsbereich 1k. Die Wandbereiche 1j der U-förmigen Stutzen 1e, 1f, 1g sind aus Stabilitäts- und Fertigungsgründen dreiecksförmig ausgebildet.

Der Einsatz 2 hat Öffnungen 2a, 2b und 2c, durch die die Flüssigkeit vom Gehäuse in den Einlaß bzw. vom Einlaß 2 in das Gehäuse 1 gelangen kann. Die Auslaßstutzen 2a', 2b' und 2c' stehen kragenförmig über, wobei zusätzliche Kragenabschnitte 2g am Einsatz 2 vorgesehen sind. Zwischen den zusätzlichen Kragenabschnitten 2g und den Auslaßstutzen 2a', 2b' und 2c' des Einsatzes 2 sind Ausnehmungen 2h, welche im eingesetzten Zustand die Wandungen 1j der U-förmigen Stutzen 1e, 1f und 1g umschließen. Die zusätzlichen Kragenabschnitte 2g sind kreissigmentförmig, wobei der Außendurchmesser der Kreissigmente nur geringfügig kleiner als der Innendurchmesser D2 des Gehäuses 1 ist, so daß der Einstiegsbereich 1k bei eingesetztem Einsatz 2 in das Gehäuse 1 möglichst vollständig überdeckt ist.

Der Einsatz 2 hat eine schräge Fläche, in welche Kanäle 2a'' und 2b'' eingeformt sind. Im Kanal 2a'' ist das Sieb 3 angeordnet, durch das die vom Zulauf her durch den Kanal 2a'' kommende Flüssigkeit die Fläche des Einsatzes durchtreten und hin zum Abfluß 1c gelangen kann. Die nicht zu filternde Flüssigkeit gelangt über die schräge Fläche 2b'' zum Ablauf 1b.

Die Figur 4 zeigt das Gehäuse mit eingesetzten Einsatz 2. Deutlich ist zu erkennen, daß der Einstiegsbereich 1k durch den Einsatz 2 vollständig abgedeckt ist.

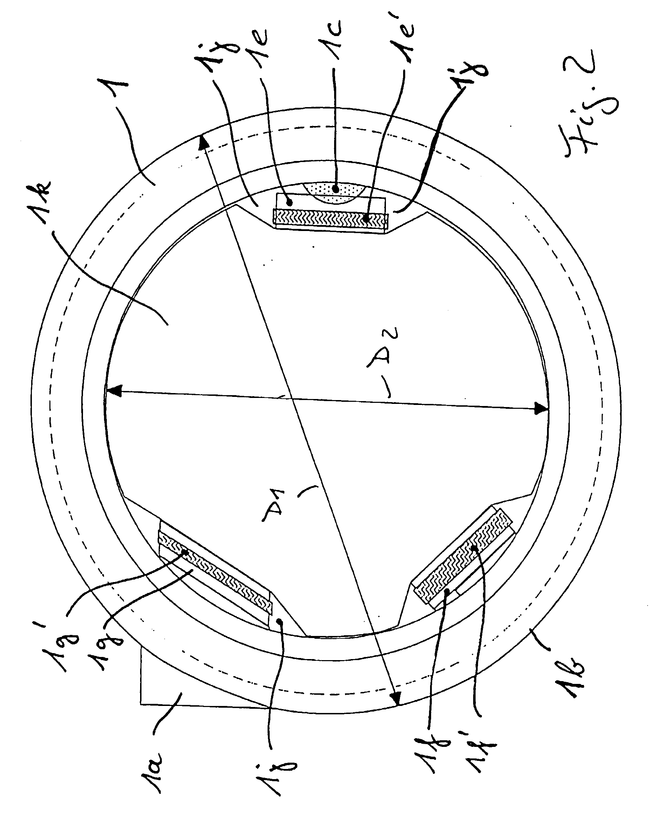

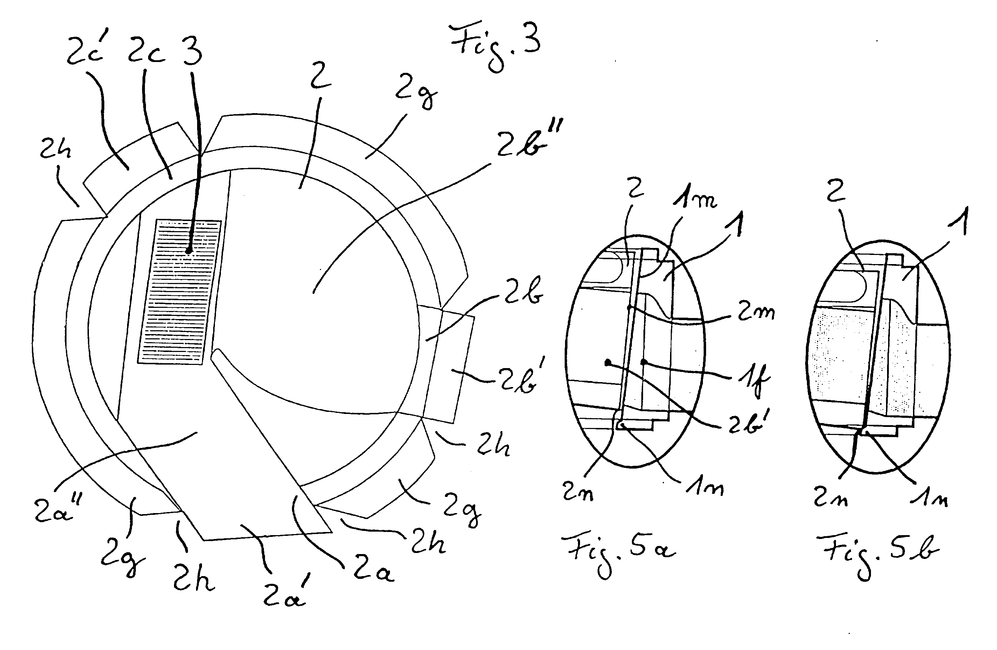

Die Figuren 5a und 5b verdeutlichen exemplarisch an dem Ablauf für die ungefilterte Flüssigkeit, daß die miteinander korrespondierenden Öffnungen bzw. U-förmigen Stutzen 1e, 1f, 1g und die hiermit korrespondierenden Auslaßstutzen am Gehäuse derart angeordnet sein müssen, daß selbst bei Fertigungstoleranzen die Flüssigkeit von dem Gehäuse 1 in den Einlaß 2 gelangen kann, ohne das die Flüssigkeit zwischen den beiden Teilen nach unten durch die untere Öffnung 1h des Gehäuses 1 gelangen kann.

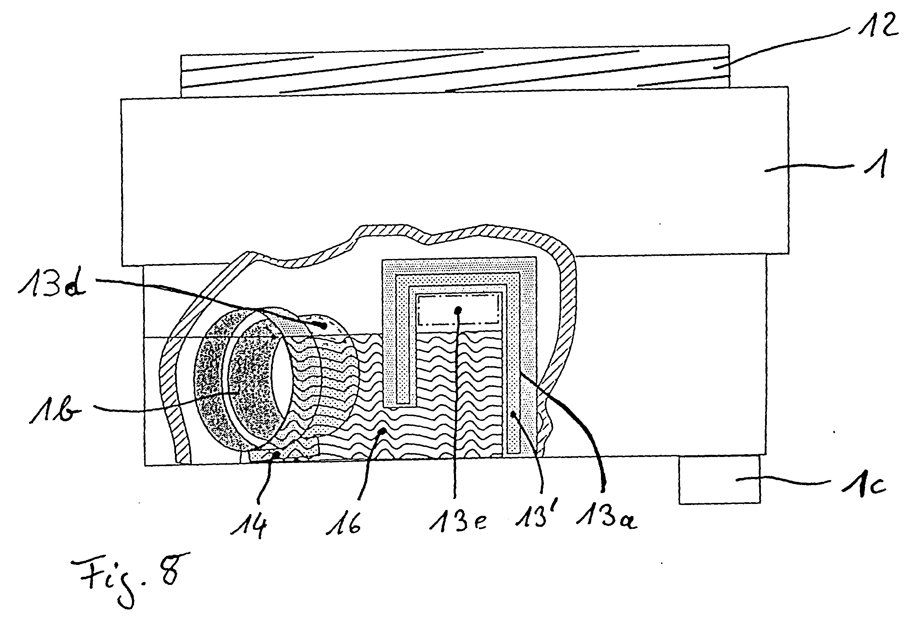

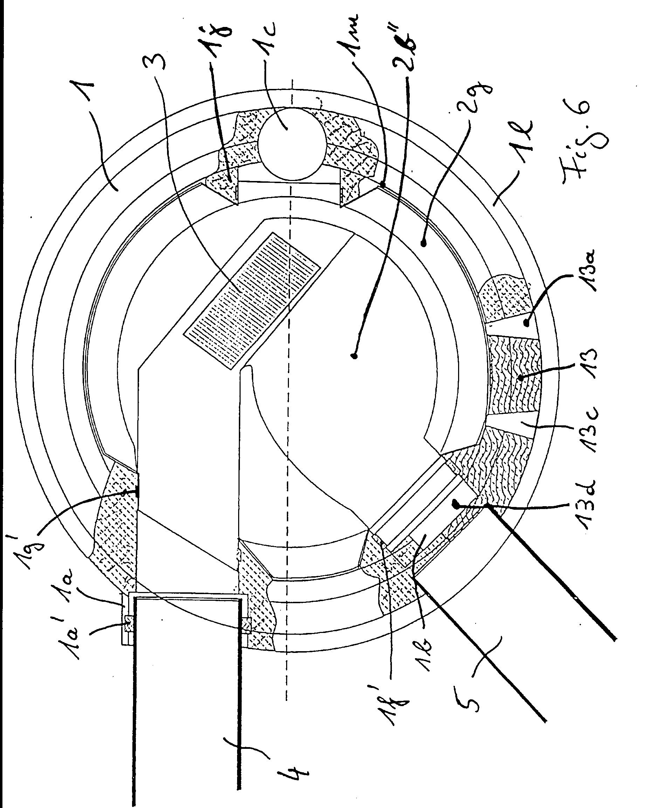

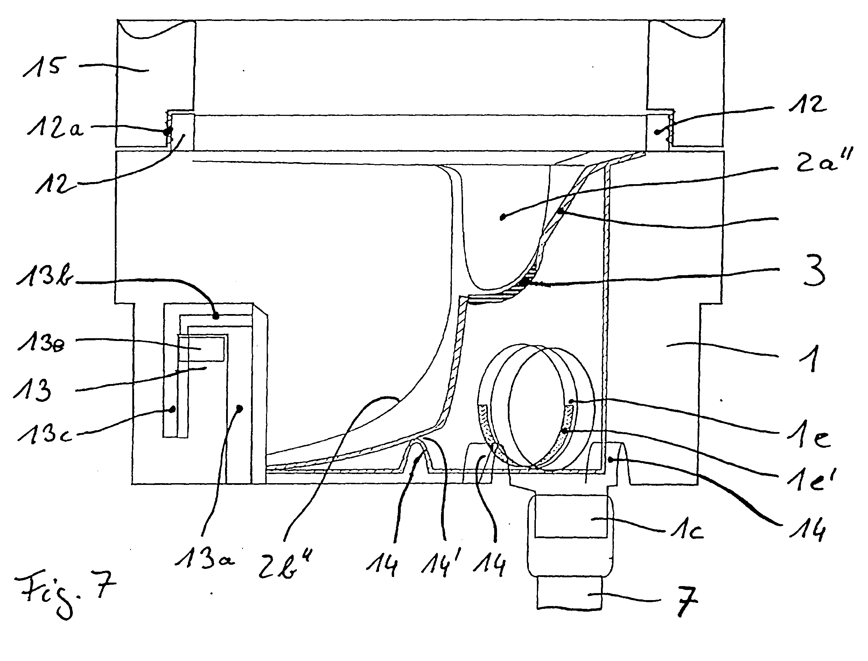

Das Gehäuse 1 ist doppelwandig ausgebildet, wobei sich zwischen der äußeren Gehäusewand 1l und der inneren Gehäusewand 1m die Flüssigkeit ausbreiten kann. Dies ist möglich, da der Innenraum zwischen den Wänden 1l und 1m des Gehäuses 1 mit dem Ablauf 1c in Verbindung ist. Mittels die Außenwand 1l und die Innenwand 1m des Gehäuses 1 verbindender Stege 13a, 13b und 13c sowie aus Figur 7 ersichtlicher Wassersperren 14, wird verhindert, daß die Flüssigkeit von einem Ablauf zum anderen gelangen kann. Zwischen dem Ablauf 1c und dem Ablauf 1b ist zwischen den Gehäusewänden 1l und 1m ein Siphon 13 angeordnet, der als Geruchssperre dient. Vom Siphon kann die Flüssigkeit über einen Wasserauslauf 13d, der im oberen Bereich des Ablaufs 1b eingeschnitten ist vom Siphon 13 zum Ablaufrohr 5 gelangen. Die Figuren 7 und 8 zeigen die Wirkungsweise des Siphons 13 im Querschnitt.

Das Gehäuse 1 wird aus zwei zylinderförmigen Formteilen hergestellt, wobei mittels eines Schweißverfahrens die beiden Kunststoffteile bzw. die Außen- und die Innenwandungen 1l, 1m des Gehäuses 1 miteinander verschweißt werden. Nach dem Verschweißen werden die Öffnungen für den Wassereinlauf 13e sowie für den Wasserüberlauf 13d hineingeschnitten bzw. gefräßt.

Zum Ausgleich der Vorrichtung an das Erdniveau ist es möglich, an den Verbindungsstutzen 12 ein oder mehrere Domaufsatzstücke 15 zu Verlängerung des Gehäuses 1 aufzuschrauben.

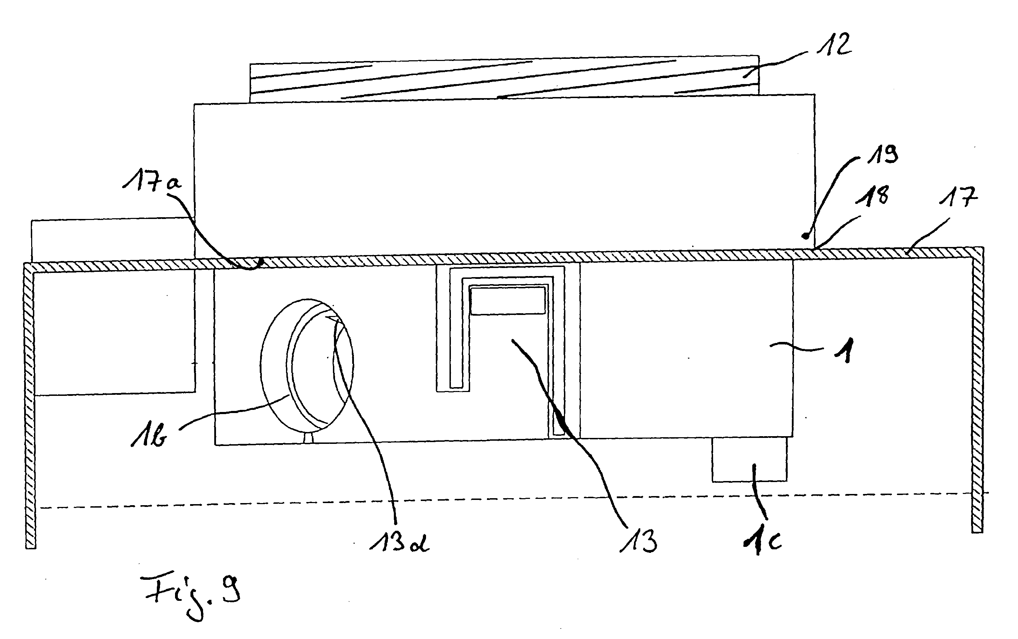

Die Figur 9 zeigt, wie das erfindungsgemäße Gehäuse 1 auf einen Kunststofftank 17 befestigtbar ist. Hierzu weist der Kunststofftank 17 an seiner Oberseite eine Öffnung 17a auf, welche an die Außenkonturen des Gehäuses 1 angepaßt ist. Das Gehäuse 1 hat eine Ringschulter 19, die ein Durchfallen des Gehäuses durch die Öffnung 17a verhindert. Im Bereich der Ringschulter 19 kann das Gehäuse 1 mit dem Kunststofftank 17 zur dauerhaften Verbindung verschweißt oder verschraubt werden.

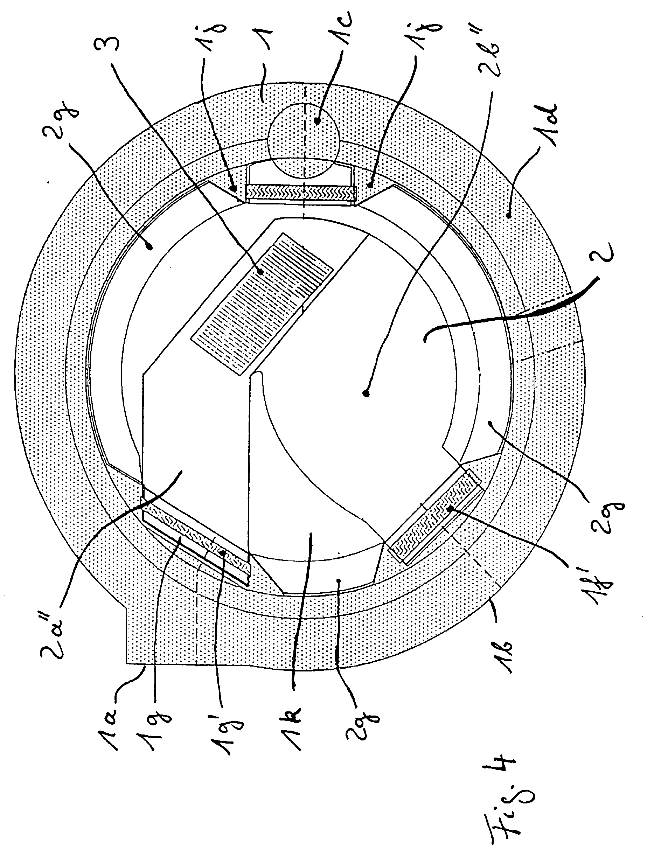

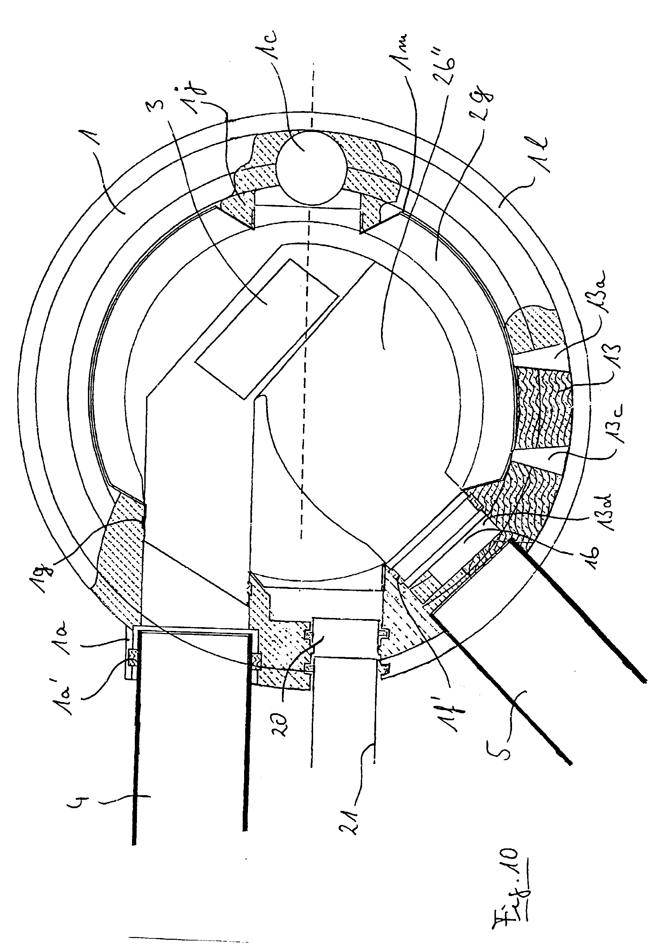

In der Figur 10 ist schließlich eine andere Ausführungsform eines erfindungsgemäßen Filters in einer Darstellung gemäß Figur 6 abgebildet. Gleiche Bauelemente tragen gleiche Bezugsziffern. Bei dieser Ausführungsform ist ein Durchbruch in Gestalt eines Anschlusses 20 vorgesehen, in den von außen her ein Leerrohr 21 eingesetzt ist. Das Leerrohr 21 steht über den Anschluß 20 mit seinem freien Querschnitt mit dem Inneren des Flüssigkeitsspeichers in Verbindung. Über diesen weiteren Anschluß 20 kann bei der Montage einer kompletten Regenwassernutzungsanlage eine Entnahmeleitung in das Flüssigkeitsvolumen des Flüssigkeitsspeichers eingebracht werden, ohne daß weitere Einbauten an dem Flüssigkeitsspeicher, dem Domaufsatz oder dem Zisternenfilter erforderlich werden. Auf diese Weise wird bei einem komplett gelieferten System der Anschluß der Zisterne an eine räumlich entfernte Regenwassernutzungsanlage erheblich vereinfacht. Zum Beispiel kann der Anschluß 20 zum Zisterneninneren hin den Saugschlauch mit Filter sowie den Füllstandssensor tragen, die in einem den Anschluß 20 ansonsten abdichtenden Stopfen gehalten sind. Die andere, nach außen weisende Seite des Stopfens trägt dann Schraub- oder Steckanschlüsse, die zur Verbindung mit einer Hausinstallation dienen. Die in die Zisterne ragenden Einbauten sind dabei möglichst so auszulegen, daß sie von dem Anschluß 20 nach unten weisen, da dann der lichte Querschnitt nach Herausnehmen des Filters nicht eingeengt wird und bei bestehender Installation ein Einstieg in die Zisterne möglich ist.

Es versteht sich von selbst, daß die erfindungsgemäße Vorrichtung für beliebige andere Behältnisse zur Aufnahme von gefilterter Flüssigkeit in seiner Form an diese Behältnisse angepaßt werden kann. Insbesondere können die U-förmigen Stutzen durch V-förmige Stutzen ersetzt werden. Auf die Stutzen kann auch vollständig verzichtet werden, sofern die Gehäuseinnenseite nach unten hin konisch zusammenläuft. In diesem Fall ist auch die Mantelfläche des Einsatzes konisch gestaltet, derart, daß auch bei Fertigungstoleranzen der Einsatz stets sicher an der Innenwand des Gehäuses anliegt. Diese konische Ausführungsform ist in den Figuren 5a und 5b veranschaulicht. Bei dieser Ausführungsform wird lediglich eine umlaufende Dichtung unterhalb der am tiefsten angeordneten Öffnung des Gehäuses benötigt, die die zwischen Gehäuse und Einsatz geflossene Flüssigkeit daran hindert nach untern aus der Filtervorrichtung herauszufließen. Die mit dem Einsatz korrespondierende Öffnung im Gehäuse für die ungefilterte Flüssigkeit ist hierbei vorteilhaft tiefer angeordnet als die Öffnung für den Ablauf für die gefilterte Flüssigkeit, so daß die ungefilterte Flüssigkeit nicht über den Zwischenraum zwischen Gehäuse und Einsatz in den Ablauf für die gefilterte Flüssigkeit gelangen kann.

## Patentansprüche

1. Vorrichtung zum Filtern von Flüssigkeit mit einem Gehäuse (1), welches einen Zulauf (1a) für die ungefilterte, einen Ablauf (1b) für die gefilterte und einen Ablauf (1c) für die ungefilterte Flüssigkeit aufweist, und mit einem im Gehäuse (1) angeordneten herausnehmbaren Einsatz (2), welcher ein Sieb (3) aufweist, wobei der Einsatz (2) dem Gehäuse (1) zugewandte, mit dem Zulauf (1a) bzw. den Abläufen (1b,1c) kommunizierende Öffnungen (2a,2b,2c) aufweist, wobei das Gehäuse (1) eine obere und eine untere Öffnung (1h,1i) zum Durchgreifen oder Durchgang bei herausgenommenem Einsatz (2) hat, und der Einsatz (2) durch die obere Öffnung (1h) in das Gehäuse (1) einsetzbar ist und die aus dem Ablauf (1c) für gefilterte Flüssigkeit fließende Flüssigkeit über eine Zuleitung (7) in einen unterhalb der Vorrichtung angeordneten Flüssigkeitsspeicher gelangt, **dadurch gekennzeichnet,** daß der Ablauf (1c) für die gefilterte Flüssigkeit seitlich neben der unteren Öffnung (1h) des Gehäuses (1) angeordnet ist.

2. Vorrichtung nach Anspruch 1, **dadurch gekennzeichnet**, daß die Öffnung (1e) für den Ablauf (1c) für die gefilterte Flüssigkeit außenmittig im Gehäuse (1) angeordnet ist.

3. Vorrichtung nach Anspruch 1 oder 2, **dadurch gekennzeichnet**, daß die Öffnungen (2a,2b,2c) in der Mantelfläche des im wesentlichen zylindrischen Einsatzes (2) angeordnet sind.

4. Vorrichtung nach einem der Ansprüche 1 bis 3, **dadurch gekennzeichnet**, daß an die Öffnungen (2a,2b,2c) des Einsatzes (2) seitlich freistehende Auslaßstutzen (2a',2b',2c') angrenzen.

5. Vorrichtung nach Anspruch 4, **dadurch gekennzeichnet**, daß die Auslaßstutzen (2a',2b',2c') des Einsatzes (2) im eingesetzten Zustand auf Stützflächen (1e,1f,1g) des Gehäuses (1) anfliegen, wobei an den Stützflächen (1e,1f,1g) seitliche Wände angrenzen, und daß zwischen den Auslaßstutzen (2a',2b',2c') und den korrespondierenden Stützflächen (1e,1f,1g) und deren zugehörigen Wänden Dichtungselemente (1e',1f',1g') angeordnet sind.

6. Vorrichtung nach Anspruch 5, **dadurch gekennzeichnet,** daß die freistehenden Auslaßstutzen (2a',2b',2c') zusammen mit den Stützflächen (1e,1f,1g) ein Durchfallen des Einsatzes (2) durch die untere Öffnung (1h) des Gehäuses (1) verhindern.

7. Vorrichtung nach einem der vorherigen Ansprüche, **dadurch gekennzeichnet,** daß die zu filternde Flüssigkeit seitliche durch die Gehäusewand (11) in das Gehäuse (1) und sowohl die gefilterte als auch die ungefilterte Flüssigkeit seitlich aus dem Gehäuse (1) gelangt.

8. Vorrichtung nach einem der vorherigen Ansprüche, **dadurch gekennzeichnet,** daß das Gehäuse (1) zumindest teilweise doppelwandig ausgebildet ist, wobei die gefilterte Flüssigkeit durch einen durch die Doppelwand und diese miteinander verbindende Zwischentrennwände (13a,13b, 13c,14) gebildeten Raum hin zur Zuleitung (7) fließt.

9. Vorrichtung nach Anspruch 8, **dadurch gekennzeichnet**, daß die aus dem Flüssigkeitsspeicher durch die Zuleitung (7) in den Raum übertretende Flüssigkeit über einen zwischen den Doppelwänden des Gehäuses (1) angeordneten Überlauf und einem Siphon (13) zu einem an den Ablauf (1b) des Gehäuses (1) für die ungefilterte Flüssigkeit angrenzenden Raum gelangt, von dem sie aus in den Ablauf (1b) abfließt.

10. Vorrichtung nach Anspruch 9, **dadurch gekennzeichnet**, daß der Siphon (13) durch Trennwände (13a,13b,13c) zwischen den Wänden (1l,1m) des Gehäuses (1) gebildet ist.

11. Vorrichtung nach einem der vorherigen Ansprüche, **dadurch gekennzeichnet,** daß das Gehäuse (1) aus Kunststoff ist, welches insbesondere aus Formteilen zusammengefügt ist, welche verrastet oder vorzugsweise miteinander verschweißt sind.

12. Vorrichtung nach einem der vorherigen Ansprüche, **dadurch gekennzeichnet**, daß das Sieb (3) des Einsatzes (2) ohne diesen aus dem im Gehäuse (1) eingesetzen Einsatz (2) herausnehmbar ist.

13. Vorrichtung nach einem der vorherigen Ansprüche, **dadurch gekennzeichnet**, daß das Sieb (2) einen Wandabschnitt eines Kanals (2a'') zwischen dem Zulauf (2c) und dem Ablauf (2b) für die ungefilterte Flüssigkeit bildet und daß der Ablauf (2c) für die gereinige Flüssigkeit im Betrieb unterhalb des Siebes (3) angeordnet ist.

14. Vorrichtung nach einem der Ansprüche 13 oder 14, **dadurch gekennzeichnet,** daß der Kanal (2a'') zumindest abschnittsweise eine nach oben offene Rinne bildet.

15. Vorrichtung nach einem der Ansprüche 13 oder 14, **dadurch gekennzeichnet,** daß der Kanal (2a'') eine rohrförmige Leitung, vorzugsweise mit rundem lichtem Querschnitt bildet.

16. Vorrichtung nach einem der vorhergehenden Ansprüche, **dadurch gekennzeichnet**, daß das Gehäuse (1) eine ringförmige, konische innere Mantelfläche (1l) mit einem freien inneren Querschnitt aufweist, die mit den Öffnungen (2a,2b,2c) des Einsatzes (2) korrespondierende Öffnungen (1e,1f,1g) trägt.

17. Vorrichtung nach einem der vorhergehenden Ansprüche, **dadurch gekennzeichnet,** daß die dem Gehäuse (1) zugeordneten Öffnungen (2a,2b,2c) des Einsatzes (2) gegenüber der Horizontalen einen Höhenversatz aufweisen, und daß die dem Einsatz (2) zugeordneten Öffnungen (1e,1f,1g) gegenüber der Horizontalen einen Höhenversatz aufweisen, und daß der Höhenversatz der Öffnungen (1e,1f,1g) in dem Gehäuse (1) größer ist als der Höhenversatz der Öffnungen (2a,2b,2c) in dem Einsatz (2).

18. Vorrichtung nach einem der vorhergehenden Ansprüche, **dadurch gekennzeichnet,** daß das Sieb (3) ein Spaltsieb ist, dessen Spalte eine Breite von 150 µm bis 500 µm, vorzugsweise 250 µm bis 400 µm aufweisen.

19. Vorrichtung nach einem der vorhergehenden Ansprüche, **dadurch gekennzeichnet,** daß ein Anschluß (20) für ein Leerrohr (21) vorgesehen ist, wobei der Anschluß (20) derart angeordnet ist, daß das Leerrohr (21) mit dem Flüssigkeitsspeicher kommuniziert und insbesondere die gespeicherte Flüssigkeit von dem Leerrohr (21) aus erreichbar ist.
